# FASCICULE DE BREVET EUROPEEN

(11) **EP 3 868 605 B1**
(45) Date de publication et mention de la délivrance du brevet: **08.05.2024**
(21) Numéro de dépôt: 21157309.2
(22) Date de dépôt: 16.02.2021
(51) Int. Cl.: B60Q 1/26, B60Q 1/32

(54) **BARRE DE TOIT LUMINEUSE POUR VÉHICULE**
BELEUCHTETER DACHTRÄGER FÜR FAHRZEUG
LIGHTED ROOF BAR FOR A VEHICLE

(30) Priorité: 20.02.2020 FR 2001684
(43) Date de publication de la demande: 25.08.2021
(73) Titulaire: Renault s.a.s, 92100 Boulogne Billancourt (FR)
(72) Inventeur: BRIN, ERIC, 78190 TRAPPES (FR); LE GOFF, LAURENCE, 91190 GIF SUR YVETTE (FR)
(74) Mandataire: Renault Group

(56) Documents cités:
- EP-A1- 3 450 258
- WO-A1-2019/024218
- CN-A- 101 856 996
- DE-A1-102014 220 630
- DE-U1-202018 101 097
- US-A1- 2011 240 695

## Description

### Domaine Technique de l'invention

L'invention concerne une barre de toit pour véhicule. L'invention porte encore sur un agencement comprenant une telle barre de toit. L'invention porte encore sur une caisse comprenant un tel agencement et/ou une telle barre de toit. L'invention porte aussi sur un véhicule comprenant une telle caisse et/ou un tel agencement et/ou une telle barre de toit.

### Etat de la technique antérieure

Un véhicule, en particulier un véhicule automobile, comprend généralement des moyens lumineux destinés à valoriser le véhicule, généralement en associant une ou des formes lumineuses à un modèle ou type de véhicule. De tels moyens lumineux sont généralement intégrés à l'avant et/ou à l'arrière, généralement au niveau voire au sein des moyens d'éclairage et/ou de signalisation du véhicule, tels que des feux ou phares avant et/ou des feux arrières. De tels moyens lumineux facilitent ainsi l'identification du modèle ou du type de véhicule en étant allumés généralement aussi bien de jour que dans des conditions de pénombre et/ou la nuit.

Le document US 2011/0240695 A1 décrit un moyen lumineux comportant un guide de lumière s'étendant le long d'une face intérieure incurvée d'une barre de toit, et émettant un faisceau lumineux orienté vers le côté extérieur du véhicule.

Dans ce contexte de valorisation de véhicule, pour des raisons esthétiques et/ou de qualité perçue, il est préférable d'équiper le véhicule de davantage de moyens lumineux.

### Présentation de l'invention

Le but de l'invention est de fournir une barre de toit remédiant aux inconvénients ci-dessus. En particulier, l'invention permet l'intégration d'un moyen lumineux au niveau du pavillon du véhicule.

### Résumé de l'invention

Pour atteindre cet objectif, l'invention porte sur un véhicule, notamment un véhicule automobile, comprenant une barre de toit comprenant un corps, un moyen de réception d'un moyen lumineux et un moyen lumineux s'étendant au moins partiellement le long de la barre de toit, le moyen lumineux étant fixé sur le moyen de réception de manière démontable et le moyen de réception étant fixé sur le corps de la barre de toit de manière démontable, le moyen lumineux émet des faisceaux de lumière en direction d'un plan médian vertical et longitudinal du véhicule, la barre de toit comprend un moyen d'étanchéité entre le corps de la barre de toit et le moyen lumineux, le moyen d'étanchéité étant confondu avec le moyen de réception.

Le moyen lumineux peut comprendre :
- au moins une source de lumière et un guide de lumière, ou
- plusieurs sources de lumière et un diffuseur de lumière, ou
- au moins une source de lumière et un guide de lumière et un diffuseur de lumière.

Le corps de la barre de toit peut comprendre au moins une surface de réflexion de la lumière, le moyen lumineux pouvant être agencé pour émettre de la lumière en direction de l'au moins une surface de réflexion. Le corps peut avoir une section selon un plan perpendiculaire ou sensiblement perpendiculaire à sa direction principale globalement en forme de U, une première aile du U pouvant comprendre une nervure interne ou une nervure externe, la nervure interne ou la nervure externe pouvant coopérer avec la première aile de sorte à ménager un logement pour le moyen de réception du moyen lumineux.

Le moyen de fixation peut comprendre :
- un premier élément pouvant être destiné à venir épouser ou sensiblement épouser le pavillon, notamment une mousse, notamment une mousse adhésive, et/ou
- un deuxième élément, notamment une semelle pouvant être destinée à venir se clipper au sein de la barre de toit, et/ou
- un troisième élément, notamment de type agrafe traversant le deuxième élément et/ou le premier élément, pouvant coopérer avec le pavillon notamment de sorte à prendre en sandwich les premier et deuxième éléments.

Le véhicule comprend une caisse comprenant une seconde barre de toit symétrique ou sensiblement symétrique à la barre de toit par rapport à un plan médian vertical et longitudinal du véhicule.

### Présentation des figures

Ces objets, caractéristiques et avantages de la présente invention seront exposés en détail dans la description suivante d'un mode de réalisation et de ses variantes, faite à titre non-limitatif en relation avec les figures jointes parmi lesquelles :
- la figure 1 est une vue schématique d'un véhicule selon un mode de réalisation,
- la figure 2 est une vue en perspective d'un agencement du véhicule selon un mode de réalisation,
- la figure 3 est une vue en coupe selon un plan vertical et transversal d'un agencement sortant du cadre de l'invention,
- la figure 4 est une vue en coupe selon un plan vertical et transversal illustrant une étape d'un procédé d'obtention d'une barre de toit sortant du cadre de l'invention,
- la figure 5 est une vue en coupe selon un plan vertical et transversal d'un agencement comprenant une barre de toit selon une première variante sortant du cadre de l'invention,
- la figure 6 est une vue en coupe selon un plan vertical et transversal illustrant une étape d'un procédé d'obtention de la barre de toit selon la première variante sortant du cadre de l'invention,
- la figure 7 est une vue en perspective depuis un intérieur de véhicule d'une barre de toit selon un mode de réalisation de l'invention,
- la figure 8 est une vue en coupe selon un plan vertical et transversal de la barre de toit selon un mode de réalisation,
- la figure 9 est une vue partielle d'un détail de la barre de toit.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

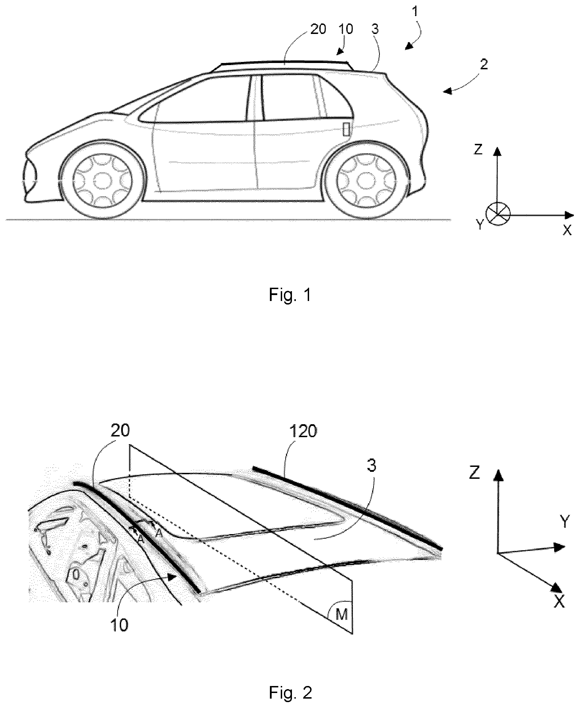

La figure 1 illustre schématiquement un véhicule, en particulier un véhicule automobile 1, selon un mode de réalisation. Le véhicule automobile 1 comprend une caisse 2. Le véhicule automobile 1 comprend un toit ou pavillon 3. Le véhicule automobile 1 ou la caisse 2 comprend un agencement 10.

Le véhicule automobile 1 ou la caisse 2 comprend encore une barre de toit 20. De préférence, la barre de toit 20 s'étend longitudinalement ou sensiblement longitudinalement, autrement dit dans la direction avant /arrière. Comme illustré sur la figure 2, le véhicule ou la caisse 2 peut comprendre une seconde barre de toit 120. De préférence, la seconde barre de toit 120 est symétrique ou sensiblement symétrique à la barre de toit 20 par rapport à un plan médian M vertical et longitudinal ou sensiblement vertical et longitudinal du véhicule.

Pour des raisons de simplification, la barre de toit qui va être décrite est la barre de toit 20, agencé côté gauche du véhicule. De préférence, la seconde barre de toit 120 comprend les mêmes caractéristiques.

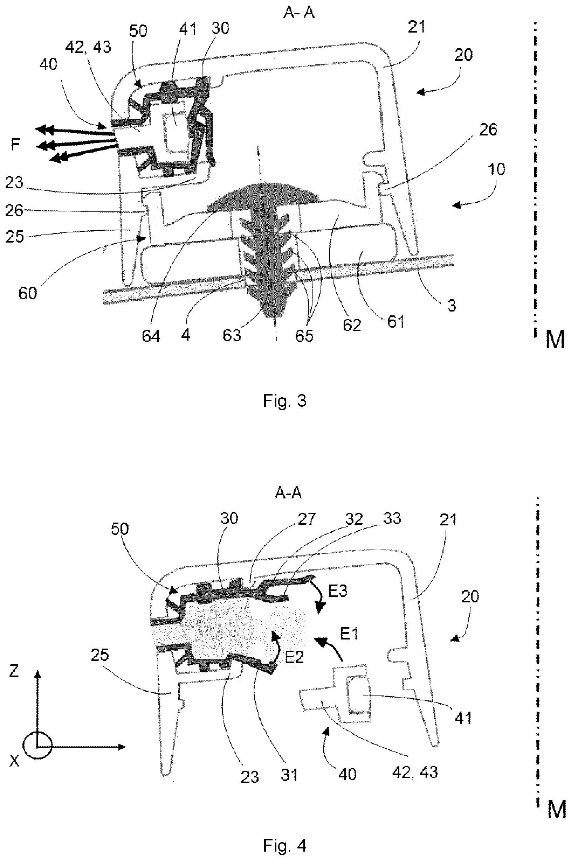

Plus précisément, comme illustré en particulier sur la figure 3, l'agencement 10 comprend la barre de toit 20, le pavillon 3 et un moyen de fixation 60 de la barre de toit 20 sur le pavillon 3.

Le moyen de fixation 60 comprend un premier élément 61 destiné à venir épouser ou sensiblement épouser le pavillon 3. Par exemple, le premier élément 61 est une mousse, par exemple une mousse adhésive. En effet, par exemple une face de la mousse destinée à venir au contact du pavillon 3 est revêtue d'un adhésif. Alternativement ou en complément, le moyen de fixation comprend un deuxième élément 62. Par exemple, le deuxième élément 62 est une semelle destinée à venir se clipper au sein de la barre de toit 20, par exemple au sein d'encoches 26 ou derrière des encoches 26 ménagées dans la barre de toit 20. Alternativement ou en complément, le moyen de fixation 60 comprend un troisième élément 63. Par exemple, le troisième élément 63 est de type fiche ou agrafe ou rivet amovible ou insert ou clip. Le troisième élément 63 traverse de préférence le deuxième élément 62 et/ou le premier élément 61. En outre, le troisième élément 63 coopère avec le pavillon 3, par exemple en prenant en sandwich les premier et deuxième éléments 61, 62. Avantageusement, comme illustré en particulier sur la figure 3, le troisième élément 63 comprend une tête 64 venant s'appuyer sur la semelle 62. Avantageusement encore, le troisième élément 63 comprend des griffes ou dents 65 permettant de maintenir rigidement le troisième élément 63 au sein d'un alésage 4 ménagé dans le pavillon 3.

Plus précisément, comme illustré notamment sur les figures 3 et 4 représentant une barre de toit sortant du cadre de l'invention, le faisceau F lumineux est direct et se dirige vers l'extérieur du véhicule. La barre de toit 20 comprend un corps 21, un moyen de réception 30 d'un moyen lumineux 40 et un moyen lumineux 40. Par exemple, le moyen lumineux 40 s'étend au moins partiellement le long de la barre de toit 20. Ainsi, en cas de barre de toit longitudinale, le moyen lumineux 40 s'étend longitudinalement ou sensiblement longitudinalement. Le moyen lumineux 40 est fixé sur, ou dans, le moyen de réception 30 de manière démontable. Alternativement ou en complément, le moyen de réception 30 est fixé sur le corps 21 de la barre de toit 20 de manière démontable. De préférence, le corps 21 a une section globalement en forme de U selon un plan A (illustré sur la figure 2) perpendiculaire ou sensiblement perpendiculaire à la direction principale selon laquelle s'étend la barre de toit. Le corps 21 comprend une première aile 25 du U. La première aile 25 comprend une nervure interne 23. La nervure interne 23 coopère avec la première aile 25 de sorte à créer ou ménager un logement interne 50. Le logement 50 loge le moyen de réception 30 du moyen lumineux 40.

La barre de toit 20 comprend un moyen d'étanchéité. Le moyen d'étanchéité est destiné à assurer l'étanchéité entre le corps 21 de la barre de toit 20 et le moyen lumineux 40 et entre le moyen lumineux et le milieu extérieur. Le moyen d'étanchéité est confondu avec le moyen de réception 30. En d'autres termes, le moyen de réception 30 assure la fonction d'étanchéité du moyen lumineux 40.

Par exemple, comme illustré sur la figure 4, pour procéder au montage ou assemblage du moyen lumineux 40 sur la barre de toit 20, on procède à l'assemblage du moyen de réception 30 dans le corps 21 par insertion. A noter que le moyen de réception a préalablement été découpé à la longueur adaptée. Le moyen de réception 30 comprend de préférence une première lamelle 31 et une deuxième lamelle 32 destinées à ouvrir ou fermer l'accès au volume intérieur du moyen de réception. Grâce à la nervure interne 23 et éventuellement à une nervure supérieure 27 ménagée au fond du U, le moyen de réception 30 est inséré puis bloqué en position au sein du logement ou cavité 50. Les lamelles 31, 32 sont donc ouvertes, autrement dit en position permettant d'accéder au sein du volume intérieur du moyen de réception. Ensuite on procède à une étape de montage E1 du moyen lumineux 40, comprenant éventuellement un diffuseur comme il sera vu par la suite, au sein du moyen de réception 30 (illustré en gris clair au cours de son insertion). Cette étape E1 est assurée en glissant le moyen lumineux dans le profil ouvert du moyen de réception, c'est-à-dire lamelles ouvertes, jusqu'à sa position finale. On procède ensuite à la fermeture du profil du moyen de réception 30 en actionnant par pivotement la première lamelle 31 en premier ce qui correspond à l'étape E2. On pivote ensuite la deuxième lamelle 32 du moyen de réception 30, c'est l'étape E3. La deuxième lamelle 32 est de préférence dotée d'une lèvre 33. Aussi, en fin d'étape E3, la première lamelle 31 se retrouve coincée entre la deuxième lamelle 32 et la lèvre 33 via un principe de crochetage intégré. De préférence, le moyen de réception est dimensionné en fonction du moyen lumineux et de sorte à ce qu'une fois assemblé le moyen lumineux exerce une force vers les premières et deuxième lamelles 31, 32 de sorte à les maintenir au contact et à assurer l'étanchéité. En effet, dans cet agencement sortant du cadre de l'invention, le moyen de réception assure par exemple lui-même une fonction d'étanchéité sans recourir à un joint supplémentaire.

La mousse 61 et la semelle 62 sont par exemple préalablement fixés sur le pavillon 3 via le moyen de fixation 63, par exemple sur une tôle du pavillon 3. La barre de toit dotée du moyen lumineux est ensuite clipée sur l'ensemble support comprenant la mousse et la semelle, plus précisément par coopération par clipage entre la semelle 62 et les encoches 26 des ailes du corps 21.

Alternativement ou en complément, un moyen d'étanchéité est ajouté entre le moyen de réception 30 et le corps 21 de la barre de toit (non illustré).

Par exemple, le moyen de réception 30 est de type profilé extrudé.

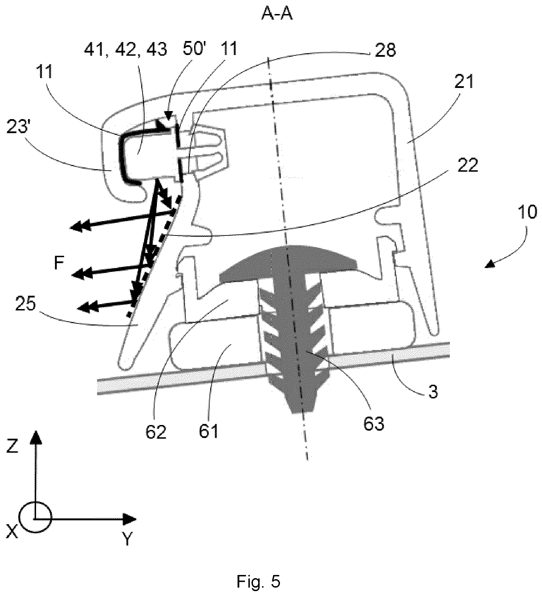

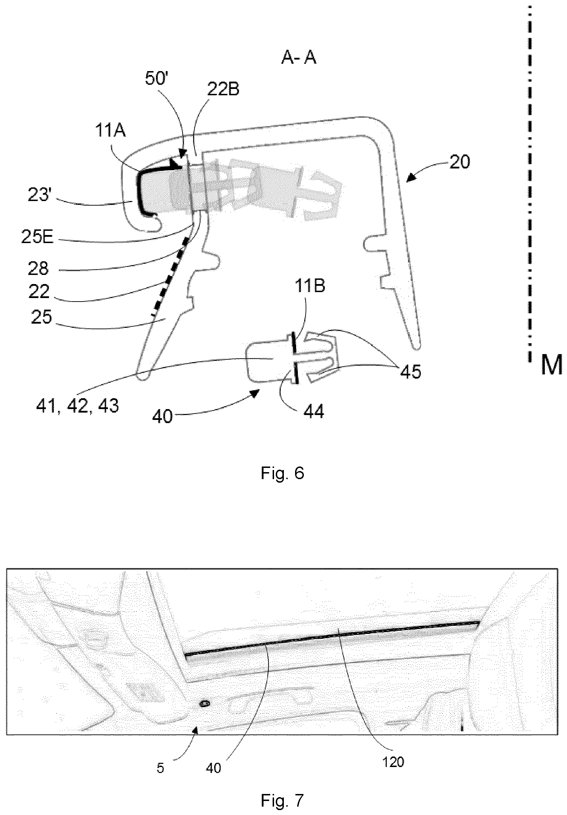

Selon une première variante sortant du cadre de l'invention, comme illustré sur les figures 5 et 6, le faisceau lumineux F est indirect et se dirige vers l'extérieur du véhicule. La première aile 25 comprend une nervure externe 23'. La nervure externe 23' coopère avec la première aile 25 de sorte à créer ou ménager un logement externe 50'. Le logement 50' permet de recevoir le moyen de lumineux 40. De préférence, dans cette première variante, le moyen de réception est, ou comprend, le logement 50'. Dans cette configuration, le corps 21 de la barre de toit 20 comprend une surface de réflexion 22 (en pointillés) de la lumière. Le moyen lumineux 40 est alors agencé de sorte à émettre de la lumière en direction de cette surface de réflexion 22, c'est pourquoi on parle d'éclairage indirect. Alternativement, plusieurs surfaces de réflexion peuvent être prévues sur le corps 21 et/ou sur le pavillon 3 du véhicule. Dans ce cas, le moyen lumineux comprend par exemple un guide lumière (par exemple à LED). Le guide lumière est de préférence intégré judicieusement pour permettre de répandre de façon homogène la lumière par reflet sur la ou les surface de réflexion 22 de la barre de toit. La ou les surfaces 22 sont alors de préférence orientées en conséquence.

Comme illustré en particulier sur la figure 6, pour cette variante, on procède au montage ou assemblage du moyen lumineux 40 directement sur la barre de toit 20. A cette fin, une ou plusieurs lumières 28 s'étendent longitudinalement à proximité du fond du U au niveau d'une base 22B de la première aile 25 du corps 21. Grâce à la nervure externe 23' et à la lumière 28, un logement 50' est créé à l'extérieur du U du corps 21. Avantageusement, un premier moyen d'étanchéité 11B, par exemple de type joint en caoutchouc, est agencé sur une base 44 du moyen lumineux 40 destinée à venir au contact au niveau du pourtour de la lumière 28 du côté de la nervure externe 23'. Alternativement ou en complément, un deuxième moyen d'étanchéité 11A, par exemple de type joint en caoutchouc, est agencé au niveau de la zone de contact entre le moyen lumineux et la nervure externe 23'. De préférence, le moyen lumineux comprend des agrafes ou pattes ou lamelles 45, ou un support comprenant celles-ci, venant au contact de part et d'autre de la lumière 28 selon la direction verticale du côté de l'intérieur du U du corps 21 de la barre de toit. Par exemple, les pattes 45 assurent un maintien en position du moyen lumineux 40 au sein du logement 50' en exerçant une force dirigée vers l'intérieur du U de sorte à plaquer le joint 11B sur une face externe 25E de la première aile 25 et maximiser l'étanchéité.

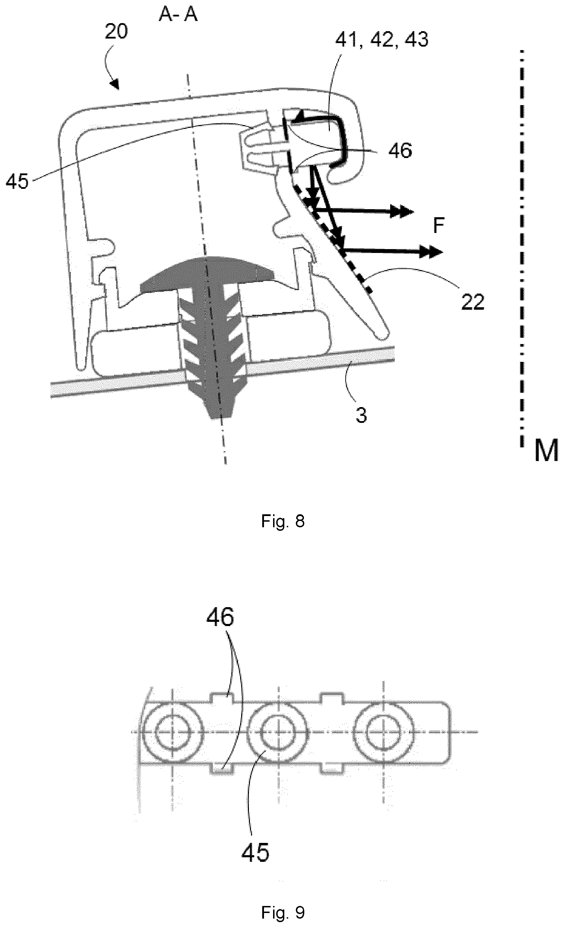

Comme illustré sur les figures 8 et 9, le moyen lumineux 40 comprenant de préférence un guide de lumière 42, comprend les agrafes 45 évoquées précédemment et des ergots de clippage 46. De préférence, les agrafes et/ou les ergots sont intégrés de façon monobloc avec le guide de lumière 42. Par exemple, sur la base 44 ou face d'appui du moyen lumineux, l'élément d'étanchéité 11B est moulé ou collé. La face interne de la cavité 50' est de préférence munie également de l'élément d'étanchéité 11A. Ainsi, le moyen lumineux est emboîté dans le logement 50'. Autrement dit, on procède au montage en passant le moyen lumineux 40 au sein de la lumière 28 jusqu'au contact ou sensiblement au contact de la nervure externe 23'. Ainsi, l'immobilisation du moyen lumineux en position se fait d'une part par les ergots 46 et d'autre part par les agrafes 45.

A noter qu'en cas de dispositif lumineux monobloc, des zones de restriction de matière peuvent servir de charnière pour comprimer des faces qui supportent des ergots de maintien en position dans le corps de la barre de toit, par exemple dans une aile de U formé par une barre de toit.

Comme dans le mode de réalisation, l'ensemble support coopérant avec les moyens de fixation 60 est fixé sur le pavillon 3, par exemple sur une tôle d'accueil du pavillon s'étendant à la surface extérieure du pavillon. Le corps de la barre de toit comprenant le moyen lumineux et ses moyens d'étanchéité, est ensuite clipé sur l'ensemble support, en particulier sur le deuxième élément 62 de type semelle d'interface comme vu précédemment.

Par exemple, comme illustré sur les figures 7 et 8, selon un mode de réalisation de l'invention, le moyen lumineux, notamment du fait de son orientation, permet d'être visible depuis l'intérieur du véhicule ou habitacle 5 par ses occupants. En effet, le moyen lumineux émet des faisceaux de lumière F en direction du plan médian M vertical et longitudinal. Dans ce mode de réalisation, l'éclairage est indirect et le moyen lumineux comprend de préférence un guide lumière (par exemple à LED). Le guide lumière est intégré de sorte à répandre de façon homogène sa lumière par reflet sur la surface de réflexion 22 de la barre de toit, elle-même étant orientée de manière adaptée.

Dans une autre variante (non illustrée), le moyen lumineux peut être orienté de sorte à être visible depuis l'habitacle 4 du véhicule par ses occupants, via un éclairage direct. Dans ce cas, par exemple le moyen lumineux comprend un diffuseur (par exemple à LED) et un guide lumière. Le guide lumière permet alors de répandre, de façon homogène sur sa longueur, l'intensité de lumière amenée par le diffuseur.

Par exemple, le moyen lumineux 40 comprend au moins une source de lumière 41, par exemple une LED, et un guide de lumière 42. Alternativement, le moyen lumineux 40 comprend plusieurs sources de lumière 41, par exemple plusieurs LED, et un diffuseur de lumière 43. Alternativement encore, le moyen lumineux 40 comprend au moins une source de lumière 41 et un guide de lumière 42 et un diffuseur de lumière 43. Comme illustré sur les figures 3, 5 et 8, le moyen lumineux émet un ou des flux lumineux F (double flèche). L'orientation du ou des moyens lumineux et/ou de la ou des surfaces de réflexion rendent visibles ces flux lumineux, par exemple depuis l'extérieur du véhicule. Par exemple, en cas d'un éclairage direct, le dispositif lumineux comprend un diffuseur, par exemple à LED, et le guide lumière. Le guide lumière permet alors de répandre, de façon homogène sur sa longueur, l'intensité de lumière amenée par le diffuseur.

En résumé, un dispositif lumineux compact est intégré sur une ou chaque barre de toit d'un véhicule de sorte à fournir soit un éclairage direct vers l'extérieur (figure 3 - agencement sortant du cadre de l'invention, installation à l'extérieur de la barre de toit), soit un éclairage indirect vers l'extérieur (figure 5 - première variante sortant du cadre de l'invention, installation à l'extérieur de la barre de toit), soit un éclairage indirect vers l'intérieur (figure 8 - mode de réalisation de l'invention, installation à l'intérieur de la barre de toit), soit un éclairage direct vers l'intérieur (non illustré - installation à l'intérieur de la barre de toit). Par « éclairage direct » ou « éclairage indirect », on entend une émission de lumière de type ligne ou liseré lumineux de sorte à créer une « signature » lumineuse spécifique au véhicule. Une fois allumé, le moyen lumineux se présente donc sous la forme d'une ligne lumineuse de préférence régulière et homogène, par exemple de très faible épaisseur.

Par exemple, l'emplacement de la source de lumière dépend de l'utilisation ou non d'un guide de lumière. Une source lumineuse est par exemple agencée en bout de guide lumière ou bien plusieurs sources lumineuses sont agencées tout le long d'un diffuseur en cas d'absence de guide lumière. Quoi qu'il en soit, le diffusant réduit fortement la vision des « points chauds » que constituent les sources de lumière (par exemple des LED) de sorte à voir une surface ou ligne lumineuse plutôt qu'une succession de points.

Par exemple, le diffuseur et le guide lumière sont injectés ensemble de sorte à éviter les fuites de lumière et garantir leur appairage et leurs conformités géométriques.

Ainsi le moyen lumineux permet, ou participe, à l'animation lumineuse en statique ou en déplacement du véhicule. Ainsi, un support d'informations ou/et d'évènements lumineux peut être ajouté au niveau du toit. De préférence encore, de manière générale, la solution est applicable à toutes formes et dimensions de barres de toit, aussi bien s'étendant longitudinalement que transversalement.

Comme évoqué, la solution est particulièrement compacte, le moyen lumineux étant au moins partiellement de préférence intégré au sein du corps de chaque barre de toit. Le véhicule est valorisé esthétiquement et le ou les moyens lumineux participent à l'identité spécifique du véhicule, aussi appelée « signature ». De plus la solution est compatible avec le transport de marchandises fixées sur les barres de toit et/ou les fixations d'un coffre de toit et/ou les fixations d'un porte vélos sur les barres de toit par exemple. Enfin, la solution offre un support lumineux pour toute information ou évènement en roulage, en statique et/ou en scénario d'accueil du véhicule compatible avec la législation.

Aussi bien dans le mode de réalisation que dans les variantes, le moyen lumineux est intégralement amovible, c'est-à-dire démontable, notamment à des fins de maintenance.

Par « démontable », il est de préférence entendu que le moyen lumineux (et les différents éléments permettant son maintien dans le corps de la barre de toit) peut être démonté sans altération du moyen lumineux et/ou des différents éléments permettant son maintien dans le corps de la barre de toit).

En cas de recours à un moyen de réception 30, celui-ci est de préférence également dissociable du corps 21 de la barre de toit pour les mêmes raisons.

Bien que la solution soit particulièrement adaptée aux barres de toit d'origine, elle peut venir équiper des barres de toit de seconde monte, voire des barres de toit additionnelles, transversales par exemple.

En remarque, la solution selon l'invention atteint donc l'objectif recherché d'amélioration de la valorisation d'un véhicule en ajoutant des moyens lumineux, ou signatures lumineuses, et présente les avantages suivants :
- elle peut être appliquée aux véhicules après leur vente ;
- elle peut être utilisée sur toutes gammes de véhicules automobiles, voire sur d'autres véhicules pouvant être équipés de barres de toit ou équivalents, voire adaptée au secteur de transport aérien ou maritime.

## Revendications

1. Véhicule, notamment véhicule automobile (1), comprenant une barre de toit (20) comprenant un corps (21), un moyen de réception (30) d'un moyen lumineux (40) et un moyen lumineux (40) s'étendant au moins partiellement le long de la barre de toit (20),
le moyen lumineux (40) étant fixé sur le moyen de réception (30) de manière démontable et le moyen de réception (30) est fixé sur le corps (21) de la barre de toit (20) de manière démontable, le moyen lumineux (40) émettant des faisceaux de lumière (F) en direction d'un plan médian (M) vertical et longitudinal d'un tel véhicule,
le véhicule étant **caractérisé en ce que** la barre de toit comprend un moyen d'étanchéité (11) entre le corps (21) de la barre de toit (20) et le moyen lumineux (40), le moyen d'étanchéité (11) étant confondu avec le moyen de réception (30).

2. Véhicule selon la revendication précédente, **caractérisé en ce que** le moyen lumineux (40) comprend :
- au moins une source de lumière (41) et un guide de lumière (42), ou
- plusieurs sources de lumière (41) et un diffuseur de lumière (43), ou
- au moins une source de lumière (41) et un guide de lumière (42) et un diffuseur de lumière (43).

3. Véhicule selon la revendication 1 ou 2, **caractérisé en ce que** le corps (21) de la barre de toit (20) comprend au moins une surface de réflexion (22) de la lumière, le moyen lumineux (40) étant agencé pour émettre de la lumière en direction de l'au moins une surface de réflexion (22).

4. Véhicule selon l'une des revendications précédentes, **caractérisé en ce que** le corps (21) a une section selon un plan perpendiculaire ou sensiblement perpendiculaire à sa direction principale globalement en forme de U, une première aile (25) du U comprenant une nervure interne (23) ou une nervure externe (23'), la nervure interne (23) ou la nervure externe (23') coopérant avec la première aile (25) de sorte à ménager un logement (50) pour le moyen de réception (30) du moyen lumineux (40).

5. Véhicule selon l'une quelconque des revendications précédentes, **caractérisé en ce qu'**il comprend un agencement (10) comprenant une barre de toit (20), un pavillon (3) et un moyen de fixation (60) de la barre de toit (20) sur le pavillon (3).

6. Véhicule selon la revendication précédente, **caractérisé en ce que** le moyen de fixation (60) comprend :
- un premier élément (61) destiné à venir épouser ou sensiblement épouser le pavillon (3), notamment une mousse, notamment une mousse adhésive, et/ou
- un deuxième élément (62), notamment une semelle destinée à venir se clipper au sein de la barre de toit (20), et/ou
- un troisième élément (63), notamment de type agrafe traversant le deuxième élément (62) et/ou le premier élément (61), coopérant avec le pavillon (3), notamment de sorte à prendre en sandwich les premier et deuxième éléments (61, 62).

7. Véhicule selon l'une quelconque des revendications 1 à 4, **caractérisé en ce qu'**il comprend une caisse (2) comprenant une seconde barre de toit (120) symétrique ou sensiblement symétrique à la barre de toit (20) par rapport à un plan médian (M) vertical et longitudinal du véhicule.

## Patentansprüche

1. Fahrzeug, insbesondere ein Kraftfahrzeug (1), das einen Dachträger (20) beinhaltet, der einen Körper (21), ein Aufnahmemittel (30) für ein Leuchtmittel (40) und ein Leuchtmittel (40), das sich mindestens teilweise entlang des Dachträgers (20) erstreckt, beinhaltet,
wobei das Leuchtmittel (40) entfernbar an dem Aufnahmemittel (30) befestigt ist und das Aufnahmemittel (30) entfernbar an dem Körper (21) des Dachträgers (20) befestigt ist,
wobei das Leuchtmittel (40) Lichtstrahlen (F) in Richtung einer vertikalen Längsmittelebene (M) eines solchen Fahrzeugs emittiert,
wobei das Fahrzeug **dadurch gekennzeichnet ist, dass** der Dachträger ein Dichtungsmittel (11) zwischen dem Körper (21) des Dachträgers (20) und dem Leuchtmittel (40) beinhaltet, wobei das Dichtungsmittel (11) mit dem Aufnahmemittel (30) zusammenfällt.

2. Fahrzeug nach dem vorhergehenden Anspruch, **dadurch gekennzeichnet, dass** das Leuchtmittel (40) Folgendes beinhaltet:
- mindestens eine Lichtquelle (41) und einen Lichtleiter (42) oder
- mehrere Lichtquellen (41) und einen Lichtdiffusor (43) oder
- mindestens eine Lichtquelle (41) und einen Lichtleiter (42) und einen Lichtdiffusor (43).

3. Fahrzeug nach Anspruch 1 oder 2, **dadurch gekennzeichnet, dass** der Körper (21) des Dachträgers (20) mindestens eine Reflexionsfläche (22) für das Licht beinhaltet, wobei das Leuchtmittel (40) dazu angeordnet ist, Licht in Richtung der mindestens einen Reflexionsfläche (22) zu emittieren.

4. Fahrzeug nach einem der vorhergehenden Ansprüche, **dadurch gekennzeichnet, dass** der Körper (21) gemäß einer zu seiner Hauptrichtung senkrechten oder im Wesentlichen senkrechten Ebene einen im Allgemeinen U-förmigen Querschnitt aufweist, wobei ein erster Arm (25) des U eine innere Rippe (23) oder eine äußere Rippe (23') beinhaltet, wobei die innere Rippe (23) oder die äußere Rippe (23') mit dem ersten Arm (25) zusammenwirkt, um einen Sitz (50) für das Aufnahmemittel (30) des Leuchtmittels (40) auszubilden.

5. Fahrzeug nach einem beliebigen der vorhergehenden Ansprüche, **dadurch gekennzeichnet, dass** es eine Anordnung (10) beinhaltet, die einen Dachträger (20), ein Dach (3) und ein Mittel zum Befestigen (60) des Dachträgers (20) auf dem Dach (3) beinhaltet.

6. Fahrzeug nach dem vorhergehenden Anspruch, **dadurch gekennzeichnet, dass** das Befestigungsmittel (60) Folgendes beinhaltet:
- ein erstes Element (61), das dazu bestimmt ist, sich der Form des Daches (3) anzupassen oder im Wesentlichen anzupassen, insbesondere ein Schaum, insbesondere ein Klebeschaum, und/oder
- ein zweites Element (62), insbesondere eine Sohle, die dazu bestimmt ist, innerhalb des Dachträgers (20) einzurasten, und/oder
- ein drittes Element (63), insbesondere vom Typ Klammer, das das zweite Element (62) und/oder das erste Element (61) durchquert und mit dem Dach (3) zusammenwirkt, insbesondere so, dass es das erste und das zweite Element (61, 62) einklemmt.

7. Fahrzeug nach einem beliebigen der Ansprüche 1 bis 4, **dadurch gekennzeichnet, dass** es eine Karosserie (2) beinhaltet, die einen zweiten Dachträger (120) beinhaltet, der in Bezug auf eine vertikale Längsmittelebene (M) des Fahrzeugs zu dem Dachträger (20) symmetrisch oder im Wesentlichen symmetrisch ist.

## Claims

1. Vehicle, in particular a motor vehicle (1), comprising a roof bar (20) comprising a body (21), a means (30) for receiving a luminous means (40) and a luminous means (40) extending at least partially along the roof bar (20),
the luminous means (40) being fastened to the receiving means (30) in a removable manner and the receiving means (30) being fastened to the body (21) of the roof bar (20) in a removable manner,
the luminous means (40) emitting light beams (F) in the direction of a vertical and longitudinal median plane (M) of such a vehicle,
the vehicle being **characterized in that** the roof bar comprises a sealing means (11) between the body (21) of the roof bar (20) and the luminous means (40), the sealing means (11) being coincident with the receiving means (30) .

2. Vehicle according to the preceding claim, **characterized in that** the luminous means (40) comprises:
- at least one light source (41) and a light guide (42), or
- a plurality of light sources (41) and a light diffuser (43), or
- at least one light source (41) and a light guide (42) and a light diffuser (43).

3. Vehicle according to Claim 1 or 2, **characterized in that** the body (21) of the roof bar (20) comprises at least one light-reflecting surface (22), the luminous means (40) being arranged to emit light in the direction of the at least one reflecting surface (22).

4. Vehicle according to one of the preceding claims, **characterized in that** the body (21) has a section in a plane perpendicular or substantially perpendicular to its main direction that has an overall U shape, a first leg (25) of the U comprising an internal rib (23) or an external rib (23'), the internal rib (23) or the external rib (23') cooperating with the first leg (25) so as to provide a housing (50) for the means (30) for receiving the luminous means (40).

5. Vehicle according to any one of the preceding claims, **characterized in that** it comprises an arrangement (10) comprising a roof bar (20), a roof panel (3) and a means (60) for fastening the roof bar (20) to the roof panel (3).

6. Vehicle according to the preceding claim, **characterized in that** the fastening means (60) comprises:
- a first element (61) intended to conform to or substantially conform to the roof panel (3), in particular a foam, in particular an adhesive foam, and/or
- a second element (62), in particular a sole intended to be clip-fastened within the roof bar (20), and/or
- a third element (63), in particular of the fastener type passing through the second element (62) and/or the first element (61), cooperating with the roof panel (3), in particular so as to sandwich the first and second elements (61, 62).

7. Vehicle according to any one of Claims 1 to 4, **characterized in that** it comprises a bodyshell (2) comprising a second roof bar (120) that is symmetrical or substantially symmetrical to the roof bar (20) with respect to a vertical and longitudinal median plane (M) of the vehicle.
